# EUROPEAN PATENT SPECIFICATION

(11) **EP 0 904 969 B1**
(45) Date of publication and mention of the grant of the patent: **09.07.2003**
(21) Application number: 98203093.4
(22) Date of filing: 16.09.1998
(51) Int. Cl.: B60K 15/063, B60K 15/073

(54) **Compact tractor operator platform, hood and fuel tank design allowing maximum operator visibility**
Fahrerplattform, Motorhaube und Kraftstofftank für Kleinschlepper zur Ermöglichung einer maximalen Sicht für die Bedienperson
Plate-forme de conduite, capot et réservoir de carburant pour petit tracteur permettant une visibilité maximale pour le conducteur

(30) Priority: 22.09.1997 US 59470 P
(43) Date of publication of application: 31.03.1999
(73) Proprietor: CNH Italia S.p.A., 41100 Modena (IT)
(72) Inventor: Knight, David L., Lititz, PA 17543 (US); Kurtz, Robert D., Jr., Leola, PA 17540 (US); Hager, Donald J., Lebanon, PA 17042 (US); Ward, Kevin W., Lititz, PA 17547 (US)
(74) Representative: Vandenbroucke, Alberic

(56) References cited:
- DE-A- 3 019 972
- DE-B- 1 101 171
- GB-A- 2 118 909
- US-A- 4 268 048
- FIRMENSCHRIFT: "Agrotron " December 1996 (1996-12) , DEUTZ-FAHR AGRARTECHNIK GMBH , LAUINGEN XP002138679 * page 4 * * page 13 *

## Description

This invention relates to an improvement of an agricultural tractor, more specifically to an improvement of the operator's platform, hood and fuel tank of a compact agricultural tractor.

Agricultural tractors have been used for a variety of farming operations for decades. Tractors have become more versatile and are now being used for a greater number of agricultural tasks. To accommodate a growing niche market, a smaller tractor or compact tractor, usually operating in the 25 to 35 horsepower range, has been introduced. Most compact tractors are used on smaller farms or by highway and road departments, where they perform a variety of tasks such as mowing, raking and landscaping. More recently a loader boom with a bucket attachment has been affixed onto the front end of these tractors which allows the tractor to lift and carry a variety of loads. To control the loader boom and bucket, a loader control has been placed near the operator's seat from where he can raise or lower the loader boom and can rotate the bucket attached to the boom. However, it has been experienced that it is frequently difficult for a compact tractor operator to observe the bucket, which can create problems for operating the bucket safely and efficiently. This is especially difficult because the operator of a compact tractor may not have extensive training or experience in operating a tractor. Typically, the hood covering the engine blocks the view of the bucket when it has been lowered. This makes it hard for an operator to easily scoop material.

Another drawback with current tractor design is the inability of the operator to observe the power-take-off (PTO) and hitch positioned at the rear of the compact tractor. Typically from the operator's seat in the compact tractor, the hitch and PTO cannot be easily observed and also most towed implements are partially obstructed.

An additional drawback with many compact tractors is the presence of a transmission hump positioned in the center of the operator's platform. This creates a tripping hazard for the operator.

It would be advantageous to have a compact tractor on which it would be easier for an operator to view the loader bucket, hitch, PTO or a towed implement. It would also be advantageous to have a compact tractor which would have an operator's platform allowing the operator to easily enter or exit.

A tractor according to the preamble of claim 1 is disclosed in US-A-4.268.048 from which it is already known to move the fuel tank from behind the engine to a location rearwardly of the operator seat in order to improve access to the operator station. However, in so doing, the visibility to the lower rear region of the tractor seriously is impaired.

It is therefore an object of the present invention to provide an agricultural tractor allowing maximum visibility for the operator towards the rear notwithstanding the presence of a rear mounted fuel tank of sufficient capacity.

According to the present invention an agricultural tractor is provided comprising :
- a pair of front wheels;
- a pair of rear wheels covered partially by a pair of fenders;
- an operator's platform having a steering wheel and an operator's seat;
- a rear hitch for attaching implements to the tractor;
- a power-take-off; and
- a fuel tank located inbetween said pair of fenders rearwardly of said operator's seat.

The tractor is characterized in that the fuel tank comprises :
- a sloped region, sloping downwardly from the operator's seat towards the rear of the tractor to allow the operator to observe the PTO and the hitch;
- bevelled regions positioned on either side of the sloped region; and
- a strain region between each bevelled region and a rear fender allowing an operator to observe an entire 2 metre towed implement.

The invention overcomes the deficiencies of the prior art by providing a compact tractor operator platform, hood and fuel tank design allowing maximum operator visibility of the loader bucket, hitch, power-take-off and towed implement. The tractor has a sloped hood with an upper console, lower console and a hood opening. The operator's seat has been moved forward on the operator's platform relative to prior art designs. The sloped nature of the fuel tank as well as the re-positioning of the operator's seat forward on the operator's platform enables the operator to more easily view the rear portion of the tractor. The operator's platform also has the transmission positioned in the middle of the platform. The transmission hump has been reduced to allow for easier operator access to the operator's platform. An elastic vibration isolator has been placed beneath the operator's platform to dampen the tractor's vibration.

The advantages of this invention will be apparent upon consideration of the following detailed disclosure of the invention, especially when taken in conjunction with the accompanying drawings wherein :
Figure 1 is a side view of the compact tractor with an operator present in the operator's seat;
Figure 2 is a side view of the compact tractor without the operator and having a loader boom and bucket;
Figure 3 is a side, rear view of the tractor detailing the sloped fuel tank; and
Figure 4 is a rear view of the tractor detailing the sloped fuel tank.

Referring to the drawings, it is possible to observe the major elements and general operation of the present invention. Left and right references are used as a matter of convenience and are determined by standing at the rear of the tractor and facing the forward end in the normal direction of travel. Likewise, terms such as "forward" and "rearward" are determined by the normal direction of travel of the tractor. Upward or downward orientations, as well as horizontal or vertical planes are relative to the ground or operating surface.

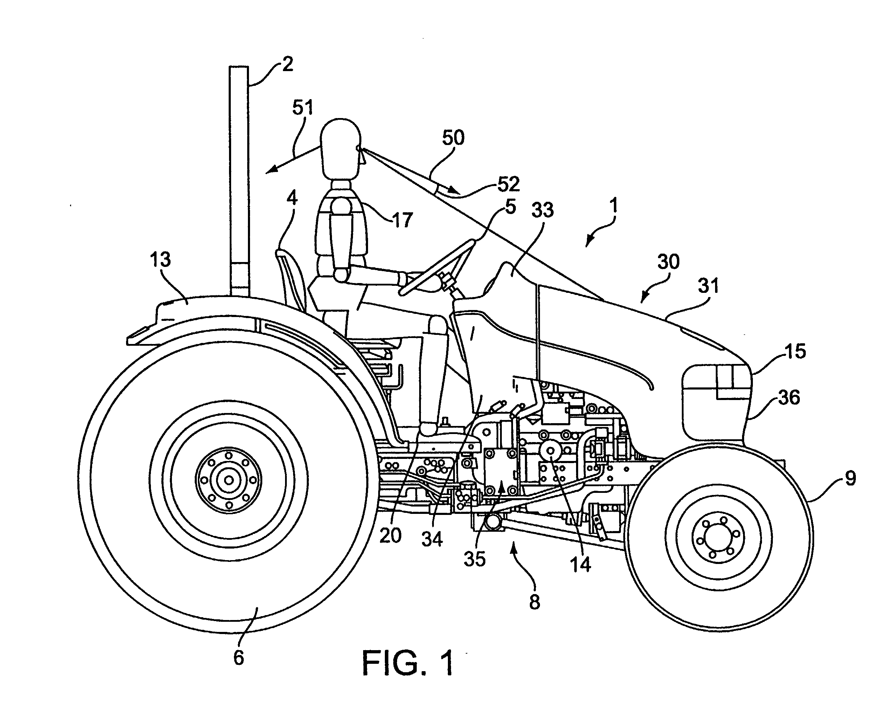

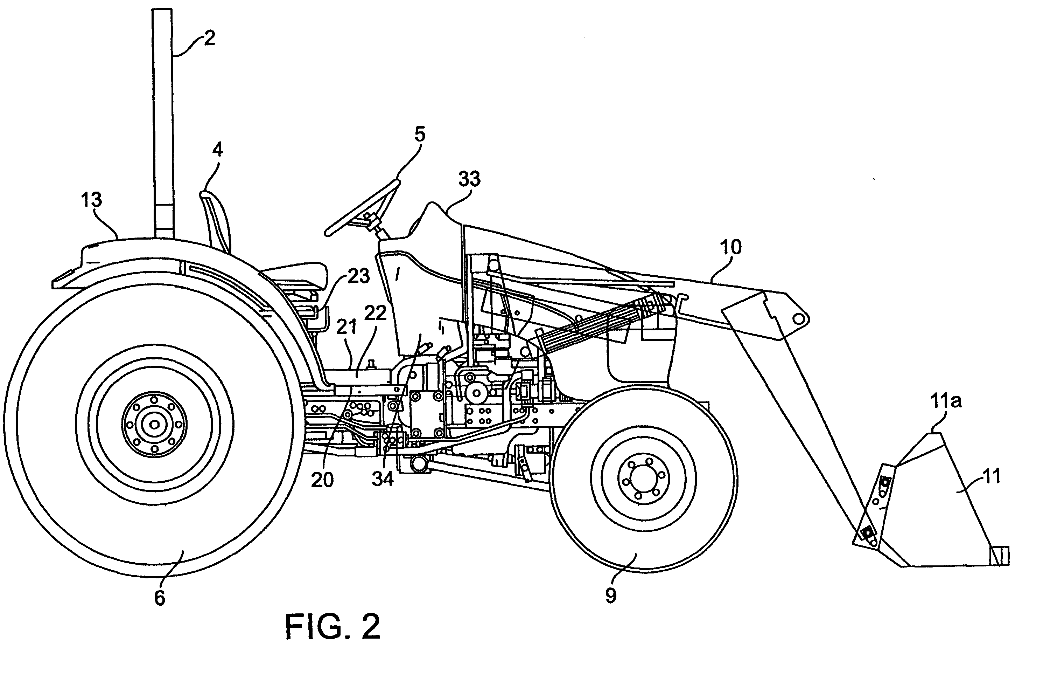

Figures 1 to 4 illustrate a conventional agricultural tractor containing the present invention. A typical farm tractor 1 has a pair of front wheels 9 (only one shown) and a pair of rear wheels 6 (only one shown) for movement and the support of the remainder of the tractor. There is an engine compartment 8 for supplying power and a fuel tank 40. An operator's platform 20 contains an operator's seat 4 from which the operator can observe and control a variety of farming operations. A steering wheel 5 supported by a steering column is located in front of the operator's seat 4. There are a set of right-hand and left-hand controls (not shown) for controlling the hitch 7, power-take-off (PTO) 12 and various other agricultural systems. The hitch 7 can pull and support a variety of towed and carried implements such as a box scraper, mower, a rake or a plough. The PTO and/or tractor hydraulics can be used to provide power to the implement if required. The rear wheels are covered by a fender 13 while the operator is protected by a roll over protection system (ROPS) 2. However, in some tractors, this protection is incorporated into an enclosed cab structure. Besides a hitch, many tractors have a loader boom 10 and loader bucket 11 for performing a variety of farm tasks. The loader boom 10 can be raised and lowered whereby the bucket, which is pivotally affixed to the boom, also is raised and lowered in conjunction with the boom. The bucket further can be rotated relative to the boom allowing materials to be scooped and carried.

The top of the hood 30 has a slope 31 enabling an operator of average stature and build to be able to view the top 11a of the loader bucket. The line of sight 50 of this operator is illustrated in figure 1. By being able to see the top 11a of the loader bucket, the operator is able to safely manipulate the bucket when at a lowered position.

The hood 30 further has several additional improvements. The hood has an upper console 33 positioned by the top of the hood near the steering wheel 5 and steering column. A lower console 34 is positioned beneath the upper console 33 and there is a hood opening 35 located in front of and below the lower console 34 which allows the operator to easily gain access to the engine compartment 8. Specifically, high maintenance items such as the oil filter 14 are easy to reach without removing or re-positioning the hood. At the front of the hood 30, there are a set of 'wrap-around' headlights 15. Beneath the headlights is a grill 36 for cooling the engine comprising several convolutions or ridges to help the flow of air and to help provide rigidity to the grill and hood.

The operator's platform 20 has the transmission 21 positioned at the mid-point of the tractor. Typically in compact tractors, the transmission hump is quite high. In the present invention, the transmission hump 22 is approximately 70 millimetres above the operator's platform. This makes entry and exit easier for the operator who now does not have to climb over a large transmission hump. The seat position in the present invention has been moved approximately 240 millimetres forward on the operator's platform when compared to prior art design compact tractors. The operator's platform also possesses an elastic vibration isolator 24 positioned beneath the operator's platform.

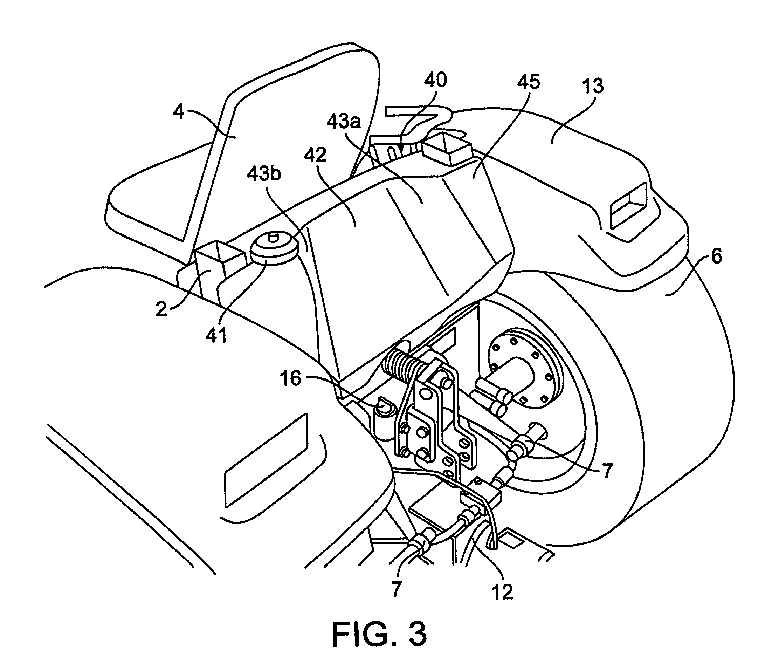

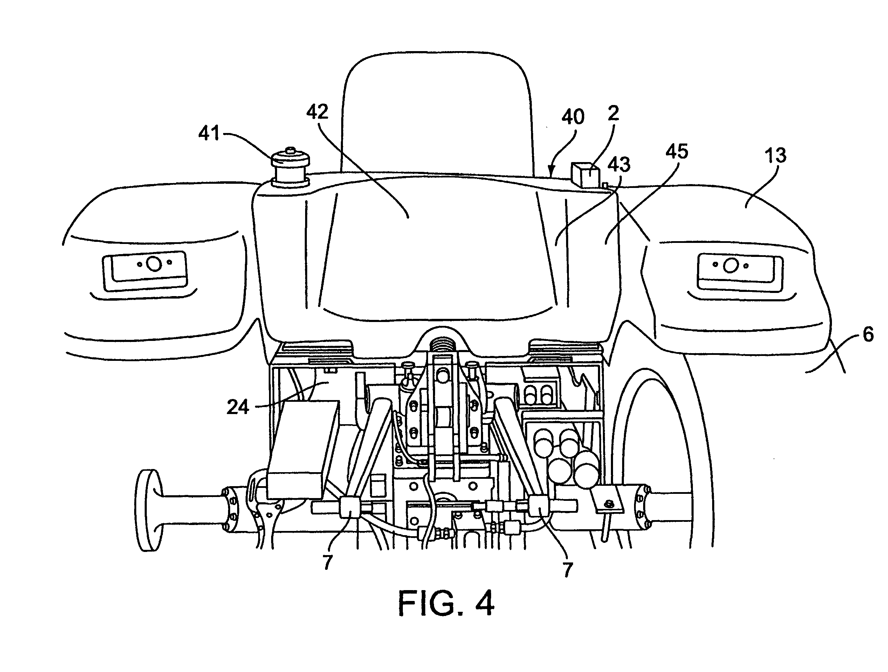

The fuel tank 40 (as illustrated in figures 3 and 4) which has a capacity of approximately 55 litres, is positioned behind the operator's platform 20 and generally between the ROPS 2. The lower part of the ROPS 2 is encapsulated on three sides by the fuel tank (40) to increase the capacity of the tank as much as possible. In the prior art, the fuel tank was positioned between the operator and the engine behind the rear portion of the hood. By removing the fuel tank and placing it behind the operator more room is created at the front of the operator's platform. The tank 40 has a fuel fill cap 41 positioned behind the ROPS 2. However, in an alternative embodiment, not shown, the fill cap may be positioned on one of the rear fenders 13. The rear fender position would offer a slightly easier filling position. The tank 40 has a generally sloped appearance comprising several sloped areas. There is a sloped region 42 of downward grade from the operators seat 4 to the rear of the tractor allowing the operator to easily view the hitch 7 and PTO 12. A pair of bevelled regions 43a (right) and 43b (left) are positioned on either side of the sloped region 42 whereas a strain region 45 is positioned between the sloped region 42 and each rear fender 13. The strain region 45 is an area which enables an average operator, by straining his neck approximately 10 centimetres, to observe the sides of the hitch 7. The base of the fuel tank 40 is positioned above the hitch 7 and PTO 12 as well as above a hydraulic fill point 16. The fuel tank 40 may be covered with a fibre glass cover to further protect the tank.

It will be appreciated that the sloped and bevelled regions of the fuel tank 40 are designed to allow an operator of average stature and build to easily view the left and right sides of a 2 metre towed implement when looking rearwardly along a line of sight 51. As already mentioned, the sloped and bevelled regions are further designed to allow an average operator to easily view the hitch 7 and PTO 12. The forward position of the operator's seat 20 also assists in the operator being able to view the hitch and PTO, as well as a front loader, with greater ease.

## Claims

1. An agricultural tractor comprising :
- a pair of front wheels (9);
- a pair of rear wheels (6) covered partially by a pair of fenders (13);
- an operator's platform (20) having a steering wheel (5) and an operator's seat (4);
- a rear hitch (7) for attaching implements to the tractor;
- a power-take-off (12); and
- a fuel tank (40) located inbetween said pair of fenders (13) rearwardly of said operator's seat (4); and
**characterized in that** the fuel tank (40) comprises :
- a sloped region (42), sloping downwardly from the operator's seat (4) towards the rear of the tractor to allow the operator to observe the PTO (12) and the hitch (7);
- bevelled regions (43a, 43b) positioned on either side of the sloped region (42); and
- a strain region (45) between each bevelled region (43a, 43b) and a rear fender (13) allowing an operator to observe an entire 2 metre towed implement.

2. A tractor according to claim 1 and further comprising a roll-over protection system (2), **characterized in that** said fuel tank (40) is positioned inbetween said ROPS (2), a lower part of said ROPS (2) being partially encapsulated by said fuel tank (40).

3. A tractor according to claim 1 or 2 **characterized in that** the fuel tank (40) comprises a fuel fill cap (41) positioned on one of the rear fenders (13).

4. A tractor according to any of the preceding claims **characterized in that** said fuel tank (40) further comprises a cover (-) for surrounding the fuel tank (40), said cover being constructed from Fiberglas.

5. A tractor according to any of the preceding claims **characterized in that** the tractor further comprises a sloped hood (30) positioned in front of the operator's platform (20), said hood having a lower console (34) and an upper console (33), and allowing an operator to observe a front loader bucket (11).

6. A tractor according to claim 5 **characterized in that** the hood (30) further comprises an engine opening (35) for reaching an oil filter (14) without removing the hood (30).

7. A tractor according to any of the preceding claims **characterized in that** the operator's platform (20) further comprises a transmission hump (22) positioned in the midsection of said platform (20) and extending approximately 70 mm thereabove.

## Patentansprüche

1. Ackerschlepper mit:
- einem Paar von Vorderrädern (9);
- einem Paar von Hinterrädern (6), die teilweise durch ein Paar von Kotflügeln (13) abgedeckt sind;
- einer Fahrerplattform (20) mit einem Lenkrad (5) und einem Fahrersitz (4),
- einer hinteren Anbauvorrichtung (7) zum Anbau von Arbeitsgeräten an den Traktor,
- einem Zapfwellenantrieb (12), und
- einem Treibstofftank (40), der zwischen dem Paar von Kotflügeln (13) hinter dem Fahrersitz (4) angeordnet ist, und
**dadurch gekennzeichnet, dass** der Treibstofftank (40) folgendes umfasst:
- einen geneigten Bereich (42), der von dem Fahrersitz (4) aus nach unten zur Rückseite des Schleppers geneigt ist, um es dem Fahrer zu ermöglichen, den Zapfwellenantrieb (12) und die Anbauvorrichtung (7) zu betrachten,
- abgeschrägte Bereiche (43a, 43b), die auf jeder Seite des geneigten Bereiches (42) angeordnet sind; und
- einen gestreckten Bereich (45) zwischen jedem abgeschrägten Bereich (43a, 43b) und einem hinteren Kotflügel (13), der es einem Fahrer ermöglicht, ein gesamtes geschlepptes Arbeitsgerät mit zwei Metern zu beobachten.

2. Schlepper nach Anspruch 1, der weiterhin ein Überroll-Schutzsystem (2) umfasst, **dadurch gekennzeichnet, dass** der Treibstofftank (40) zwischen dem Überroll-Schutzsystem (2) angeordnet ist, wobei ein unterer Teil des Überroll-Schutzsystems (2) teilweise von dem Treibstofftank (40) eingekapselt ist.

3. Schlepper nach Anspruch 1 oder 2, **dadurch gekennzeichnet, dass** der Treibstofftank (40) einen Treibstoff-Fülldeckel (41) umfasst, der auf einen der hinteren Kotflügel (13) angeordnet ist.

4. Traktor nach einem der vorhergehenden Ansprüche, **dadurch gekennzeichnet, dass** der Treibstofftank (40) weiterhin eine Abdeckung (-) aufweist, die den Treibstofftank (40) umgibt, wobei die Abdeckung aus Glasfasermaterial hergestellt ist.

5. Schlepper nach einem der vorhergehenden Ansprüche, **dadurch gekennzeichnet, dass** der Schlepper weiterhin eine geneigte Motorhaube (30) aufweist, die vor der Fahrerplattform (20) angeordnet ist, wobei die Motorhaube eine untere Konsole (34) und eine obere Konsole (33) aufweist, und es einem Fahrer ermöglicht, eine Frontlader-Schaufel (11) zu beobachten.

6. Schlepper nach Anspruch 5, **dadurch gekennzeichnet, dass** die Motorhaube (30) weiterhin eine Motoröffnung (35) zum Erreichen eines Ölfilters (14) ohne Entfernen der Motorhaube (30) aufweist.

7. Schlepper nach einem der vorhergehenden Ansprüche, **dadurch gekennzeichnet, dass** die Fahrerplattform (20) weiterhin einen Getriebebuckel (22) aufweist, der in dem Mittelabschnitt der Plattform (20) angeordnet ist und sich von dieser aus ungefähr über 70 mm nach oben erstreckt.

## Revendications

1. Tracteur agricole comportant:
- une paire de roues avant (9) ;
- une paire de roues arrière (6) partiellement couvertes par une paire de garde-boue (13);
- une plate-forme de pilotage (20) munie d'un volant de direction (5) et d'un siège d'opérateur (4);
- un attelage arrière (7) pour fixer les outils au tracteur;
- une prise de force (12); et
- un réservoir de carburant (40) situé entre ladite paire de garde-boue (13) à l'arrière dudit siège d'opérateur (4), et
caractérisé du fait que le réservoir de carburant (40) comprend:
- une zone en pente (42), s'inclinant vers le bas à partir du siège d'opérateur (4) en direction de l'arrière du tracteur pour permettre à l'opérateur d'observer la prise de force (12) et l'attelage (7);
- des zones en biais (43a, 43b) prévues de part et d'autre de la zone en pente (42) et
- une zone raide (45) entre chaque zone en biais (43a, 43b) et un garde-boue arrière (13) permettant à l'opérateur d'observer l'ensemble d'un outil tracté de 2 mètres.

2. Tracteur selon la revendication 1 et comportant en outre un système de protection de retournement (2), **caractérisé en ce que** ledit réservoir de carburant (40) est positionné entre ledit arceau de sécurité (2), une partie inférieure dudit arceau de sécurité (2) étant partiellement enveloppée par ledit réservoir de carburant (40).

3. Tracteur selon la revendication 1 ou 2, **caractérisé en ce que** le réservoir de carburant (40) comprend un bouchon de remplissage de carburant (41) positionné sur l'un des garde-boue arrière (13).

4. Tracteur selon l'une quelconque des revendications précédentes, **caractérisé en ce que** ledit réservoir de carburant (40) comprend en outre un couvercle (-) destiné à entourer le réservoir de carburant (40), ledit couvercle étant fabriqué en fibre de verre.

5. Tracteur selon l'une quelconque des revendications précédentes, **caractérisé en ce que** le tracteur comprend en outre un capot en pente (30) positionné à l'avant de la plate-forme de pilotage (20), ledit capot possédant une console inférieure (34) et une console supérieure (33), et permettant à l'opérateur d'observer une pelle (11) de chargeur avant.

6. Tracteur selon la revendication 5, **caractérisé en ce que** le capot (30) comprend en outre une ouverture de moteur (35) pour atteindre un filtre à huile (14) sans enlever le capot (30).

7. Tracteur selon l'une quelconque des revendications précédentes, **caractérisé en ce que** la plate-forme de pilotage (20) comprend en outre un bossage de carter de transmission (22) positionné dans la section médiane de ladite plate-forme (20) et s'étendant approximativement sur 70 mm au-dessus de cette dernière.
